(19) Europäisches Patentamt
European Patent Office
Office européen des brevets

(11) **EP 3 273 565 B1**

(12) **FASCICULE DE BREVET EUROPEEN**

(45) Date de publication et mention
de la délivrance du brevet:
**13.03.2019 Bulletin 2019/11**

(51) Int Cl.:
***H02J 1/14*** *(2006.01)*

(21) Numéro de dépôt: **17179886.1**

(22) Date de dépôt: **05.07.2017**

(54) **PROCÉDÉ POUR RÉCUPERER UNE ÉNERGIE EXCÉDENTAIRE DANS UNE CENTRALE DE PRODUCTION D'ÉNERGIE ÉLECTRIQUE**

VERFAHREN ZUR RÜCKGEWINNUNG VON ÜBERSCHÜSSIGER ENERGIE IN EINEM KRAFTWERK, DAS ELEKTRISCHE ENERGIE ERZEUGT

METHOD FOR RECOVERING SURPLUS ENERGY IN A PLANT FOR PRODUCING ELECTRIC ENERGY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.07.2016 FR 1656986**

(43) Date de publication de la demande:
**24.01.2018 Bulletin 2018/04**

(73) Titulaire: **Sagemcom Energy & Telecom SAS**
**92500 Rueil-Malmaison (FR)**

(72) Inventeurs:
• **BOUKHARI, Kévin**
**92500 RUEIL MALMAISON (FR)**
• **TARDY-MARCANTONI, Romain**
**92500 RUEIL MALMAISON (FR)**

(74) Mandataire: **Lavaud, Thomas et al**
**Cabinet Boettcher**
**16, rue Médéric**
**75017 Paris (FR)**

(56) Documents cités:
**WO-A1-2010/134855    WO-A1-2016/017731**
**CN-U- 204 349 858    US-A1- 2009 152 947**
**US-A1- 2015 326 012    US-B1- 6 652 330**

EP 3 273 565 B1

## Description

L'invention concerne le domaine des centrales de production d'énergie électrique à partir d'une énergie renouvelable, et la récupération de l'énergie excédentaire disponible dans de telles centrales.

### ARRIERE PLAN DE L'INVENTION

Dans certains pays où le taux d'ensoleillement est important, les opérateurs téléphoniques utilisent des centrales de production d'énergie électrique comprenant des panneaux solaires et destinées chacune à alimenter un site de télécommunication comprenant des équipements électriques de télécommunication (par exemple, des antennes relais). Outre les panneaux solaires, une telle centrale de production d'énergie électrique comporte des batteries pour stocker l'énergie électrique et alimenter le site de télécommunication lorsque l'ensoleillement est insuffisant.

Un tel site de télécommunication est classiquement alimenté par une tension continue de 48Vdc. Les batteries confèrent une autonomie importante au site de télécommunication (généralement, au moins cinq jours d'autonomie).

A Madagascar, plus de deux cents sites de télécommunication alimentés par des centrales de ce type sont recensés.

Il est bien sûr très intéressant de tenter de récupérer l'énergie excédentaire disponible dans une telle centrale pour alimenter des équipements situés à proximité de la centrale, par exemple des équipements d'éclairage rural ou de pompage d'eau. Cette énergie excédentaire peut en effet être relativement importante. Typiquement, il est possible d'alimenter grâce à l'énergie excédentaire d'une centrale alimentant un site de télécommunication situé à Madagascar un château d'eau ayant une capacité de stockage d'eau de 20 à 30m$^3$, ce qui correspond au besoin en eau d'un village de 1000 habitants, ou bien d'alimenter deux à quatre lampadaires standards.

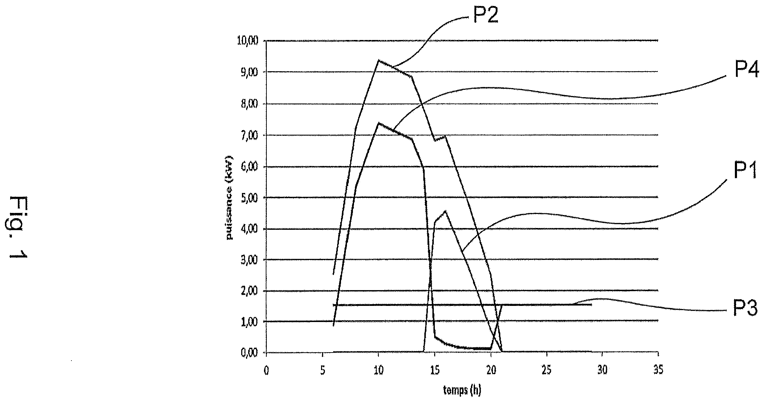

Les courbes de puissance de la figure 1 sont issues de mesures réalisées sur une centrale de production photovoltaïque située à Madagascar, qui est destinée à alimenter un site de télécommunication.

On note que la puissance excédentaire P1 disponible est très faible au moment de la charge des batteries, puis commence à augmenter de manière importante au moment t0, juste avant la fin de la charge des batteries. La puissance excédentaire P1 correspond approximativement à la puissance P2 fournie par les panneaux solaires à laquelle est retranchée la puissance P3 permettant d'alimenter le site de de télécommunication et la puissance P4 utilisée pour recharger les batteries. Dans l'exemple illustré par les courbes de puissance de la figure 1, le pic de puissance excédentaire correspond à une puissance de 4,5kW, et l'énergie excédentaire disponible est égale à 17,7kWh.

Bien sûr, il convient d'assurer que la récupération de l'énergie excédentaire ne dégrade pas l'alimentation du site de télécommunication.

Le document WO2010134855-A1 dévoile une centrale qui transforme une énergie renouvelable en énergie électrique, comprenant un premier espace pour installer des équipements de télécommunication et un deuxième espace d'accueil pour accueillir des batteries. La température des espaces d'accueil est maintenue sous une température respective T1 et T2 par un système de refroidissement. L'énergie produite par les générateurs d'énergie renouvelables est utilisée pour approvisionner le système de refroidissement à condition que les batteries aient atteint leur niveau de charge maximal ou soient chargées à leur courant de charge maximal.

### OBJET DE L'INVENTION

L'invention a pour objet de récupérer une énergie excédentaire dans une centrale de production d'énergie électrique destinée à alimenter une installation électrique, sans pour autant dégrader le fonctionnement de la centrale et l'alimentation de l'installation électrique.

### RESUME DE L'INVENTION

En vue de la réalisation de ce but, on propose un procédé pour récupérer une énergie excédentaire dans une centrale de production d'énergie électrique, la centrale étant destinée à alimenter une installation électrique et comprenant un dispositif de conversion d'énergie renouvelable en énergie électrique et des moyens de stockage principaux de l'énergie électrique, le procédé comportant les étapes de :

- connecter à la centrale un dispositif de récupération destiné à tirer un courant de surplus provenant de la centrale, le dispositif de récupération comprenant un convertisseur de puissance ;
- piloter en courant le convertisseur de puissance en mettant en oeuvre une boucle de régulation ;
- définir une consigne de courant de surplus de la boucle de régulation ;
- incrémenter la consigne de courant de surplus d'une première valeur prédéterminée ;
- mesurer un courant de charge des moyens de stockage principaux ;

- si l'incrémentation de la consigne de courant de surplus résulte en une diminution du courant de charge supérieure à une deuxième valeur prédéterminée (k.$\Delta$Is0), décrémenter la consigne de courant de surplus de la première valeur prédéterminée ($\Delta$Is0) ;
- sinon, incrémenter à nouveau la consigne de courant de surplus de la première valeur prédéterminée.

Le procédé selon l'invention permet de maximiser le courant de surplus récupéré, tout en assurant que la récupération du courant de surplus ne réduit pas de manière trop importante le courant de charge des moyens de stockage principaux, et donc que le courant de surplus récupéré correspond bien à une énergie excédentaire disponible dans la centrale.

L'invention concerne aussi un dispositif de récupération adapté à être connecté à une centrale de production d'énergie pour tirer un courant de surplus provenant de la centrale en mettant en oeuvre le procédé qui vient d'être décrit.

L'invention concerne aussi un programme d'ordinateur comprenant des instructions pour mettre en oeuvre, par un microcontrôleur d'un dispositif de récupération adapté à être connecté à une centrale de production d'énergie, le procédé qui vient d'être décrit.

L'invention concerne de plus des moyens de stockage, caractérisés en ce qu'ils stockent un programme d'ordinateur comprenant des instructions pour mettre en oeuvre, par un microcontrôleur d'un dispositif de récupération adapté à être connecté à une centrale de production d'énergie, le procédé qui vient d'être décrit.

D'autres caractéristiques et avantages de l'invention ressortiront à la lecture de la description qui suit de modes de réalisation particuliers, non limitatifs de l'invention.

BREVE DESCRIPTION DES DESSINS

Il sera fait référence aux dessins annexés parmi lesquels :

- la figure 1 représente un graphique comprenant des courbes de puissance issues de mesures réalisées sur une centrale de production photovoltaïque ;
- la figure 2 représente une centrale de production photovoltaïque, un site de télécommunication, et un dispositif de récupération selon un premier mode de réalisation de l'invention, alors qu'aucune énergie excédentaire n'est disponible dans la centrale ;
- la figure 3 est une figure analogue à celle de la figure 2, alors que de l'énergie excédentaire est disponible dans la centrale ;
- la figure 4 est un schéma électrique du dispositif de récupération selon le premier mode de réalisation l'invention ;
- la figure 5 illustre les étapes du procédé selon l'invention ;
- la figure 6 représente une centrale de production photovoltaïque, un site de télécommunication, et un dispositif de récupération selon un deuxième mode de réalisation de l'invention.

DESCRIPTION DETAILLEE DE L'INVENTION

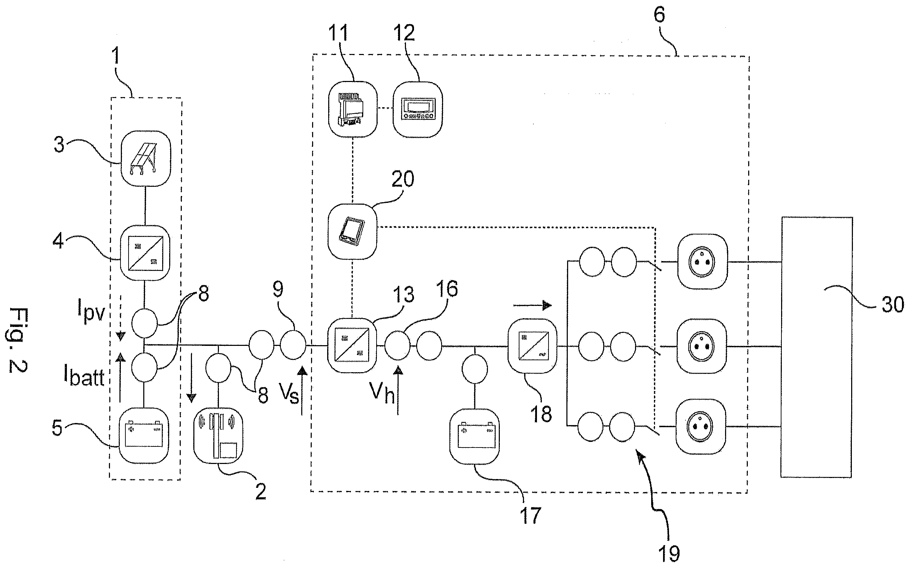

En référence aux figures 2 à 4, l'invention est ici mise en oeuvre pour récupérer une énergie excédentaire disponible dans une centrale de production d'énergie électrique, en l'occurrence dans une centrale de production photovoltaïque 1. La centrale de production photovoltaïque 1 est destinée à alimenter une installation électrique, en l'occurrence un site de télécommunication 2 comprenant des équipements électriques de télécommunication.

La centrale 1 comprend un dispositif de conversion d'énergie renouvelable en énergie électrique, comprenant en l'occurrence une pluralité de panneaux solaires photovoltaïques 3, un convertisseur de tension continue en tension continue 4, et des batteries principales 5.

Les panneaux solaires 3 transforment l'énergie solaire qu'ils captent en une énergie électrique. Les panneaux solaires 3 génèrent un courant appelé ici courant photovoltaïque Ipv, sous une tension photovoltaïque. Le convertisseur de tension continue en tension continue 4 convertit la tension photovoltaïque en une tension d'alimentation continue, ici égale à 48Vdc, adaptée à la charge des batteries principales 5 et à l'alimentation du site de télécommunication 2.

Les batteries principales 5 stockent l'énergie électrique lorsque celle-ci n'est pas utilisée directement pour alimenter le site de télécommunication 2. Le courant qui circule vers ou depuis les batteries principales 5, selon qu'il s'agit d'un courant de charge ou de décharge, est appelé ici courant de charge de batterie Ibatt. On considère ici que le courant de charge de batterie Ibatt est positif lorsque les batteries principales 5 sont en train d'être chargées, et négatif lorsque les batteries principales 5 sont en train d'être déchargées.

Le site de télécommunication 2 est ainsi alimenté, en fonction de l'heure de la journée et de l'ensoleillement de la journée, soit principalement par les panneaux solaires 3, soit principalement par les batteries principales 5. Le site de télécommunication 2 consomme un courant de télécommunication Itel. La puissance électrique consommée par le site de télécommunication 2 et le courant de télécommunication Itel sont quasiment constants dans le temps.

La récupération de l'énergie excédentaire consiste tout d'abord à connecter à la centrale 1 un dispositif de récupération 6 destiné à tirer un courant de surplus Is provenant de la centrale 1.

Bien sûr, le courant de surplus Is n'est tiré par le dispositif de récupération 6 que lorsque la centrale 1 comporte effectivement de l'énergie excédentaire.

Ainsi, lorsque l'ensoleillement est insuffisant et que le courant photovoltaïque Ipv ne peut à la fois alimenter le site de télécommunication 2 et charger les batteries principales 5, les batteries principales 5 fournissent l'énergie manquante au site de télécommunication 2. Les batteries principales 5 se déchargent, le courant de charge de batterie Ibatt est donc un courant de décharge (négatif) utilisé pour alimenter le site de télécommunication 2, et le courant de surplus Is est nul. Cette situation est visible sur la figure 2.

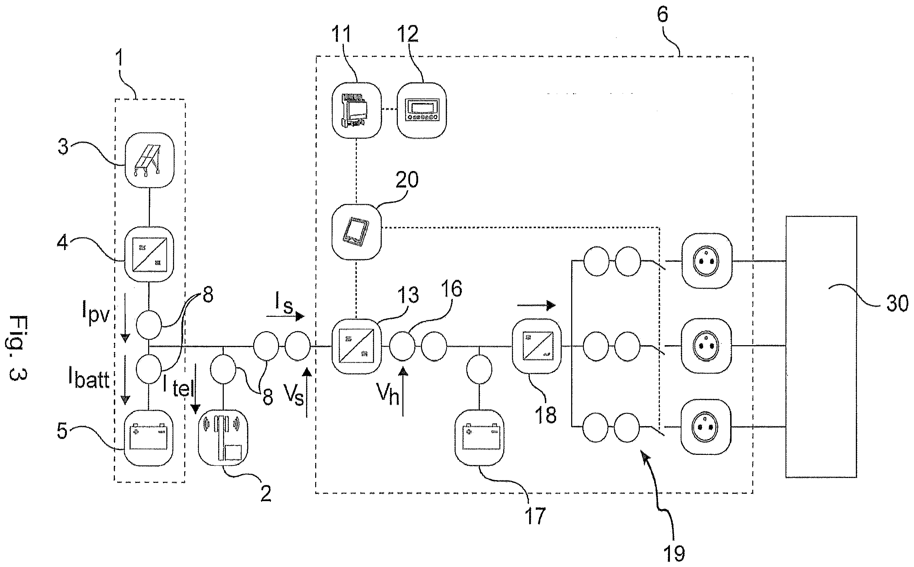

Au contraire, lorsque l'ensoleillement est suffisant et que le courant photovoltaïque Ipv peut à la fois alimenter le site de télécommunication 2 et charger les batteries principales 5, le courant de charge de batterie Ibatt est un courant de charge et le dispositif de récupération 6 peut tirer un courant de surplus Is non nul pour le récupérer. Cette situation est visible sur la figure 3.

Dans la centrale 1, des capteurs de courant 8 mesurent le courant photovoltaïque Ipv, le courant de charge de batterie Ibatt et le courant de télécommunication Itel, et un capteur de tension 9 mesure la tension de sortie Vs en sortie de la centrale 1.

Le dispositif de récupération 6, agencé dans un boîtier 11 comprenant un écran 12, comporte un module de pilotage, un convertisseur de puissance comprenant ici un hacheur dévolteur 13, un capteur de tension 16 mesurant la tension Vh en sortie du hacheur 13, des batteries secondaires 17, un onduleur 18, et des moyens de connexion 19.

Le module de pilotage comprend un microcontrôleur 20. Le microcontrôleur 20 est notamment adapté à exécuter des instructions d'un programme pour mettre en oeuvre le procédé selon l'invention.

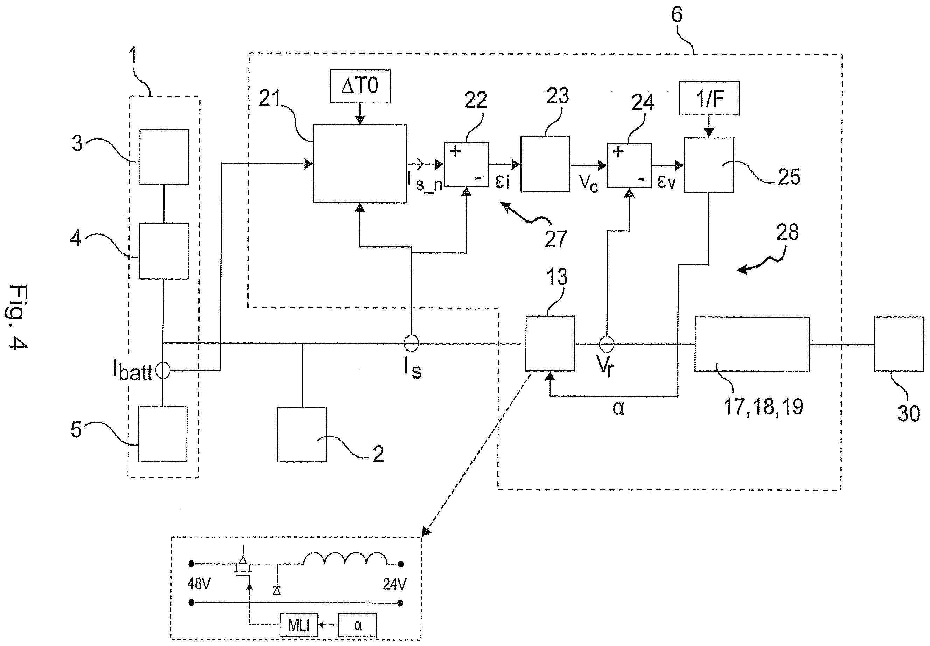

En référence à la figure 4, le microcontrôleur 20 exécute un logiciel de commande qui met en oeuvre un bloc de supervision 21, un premier comparateur 22, un bloc de régulation de courant en tension 23, un deuxième comparateur 24, et un bloc de régulation de tension 25.

Le bloc de supervision 21 contient un algorithme qui produit, au temps $T=Tn$, une consigne de courant de surplus Is_n. Le bloc de supervision 21 comporte une entrée par laquelle le bloc de supervision 21 reçoit des signaux temporels comprenant une valeur d'un pas temporel $\Delta T0$, et une entrée par laquelle le bloc de supervision 21 reçoit des mesures du courant de charge de batterie Ibatt. Les opérations réalisées par le bloc de supervision 21 sont cadencées au pas temporel $\Delta T0$.

Le premier comparateur 22 compare la consigne de courant de surplus Is_n et le courant de surplus Is effectivement tiré par le dispositif de récupération 6, et calcule une erreur de courant si. Le bloc de régulation de courant en tension 23 effectue une régulation de type PID (pour « proportionnel, intégral, dérivé ») pour minimiser l'erreur de courant si, et génère une consigne de tension Vc.

Le deuxième comparateur 24 compare la consigne de tension Vc et la tension Vh en sortie du hacheur 13 et calcule une erreur de tension $\varepsilon v$.

Le bloc de régulation de tension 25 comprend une entrée par laquelle le bloc de régulation de tension 25 reçoit des signaux temporels comprenant des valeurs de l'inverse de la fréquence de découpage F du hacheur 13. Le bloc de régulation de tension 25 effectue une régulation de type PID sur l'erreur de tension $\varepsilon v$ calculée par le deuxième comparateur 24. Le bloc de régulation de tension 25 produit un rapport cyclique de pilotage $\alpha$ formant une commande PWM (pour *Pulse Width Modulation,* en anglais, ou modulation de largeur d'impulsions). La commande PWM est transmise au hacheur 13. Le hacheur 13 est ainsi piloté de manière à minimiser l'erreur de tension $\varepsilon v$, et donc de manière à ce que le hacheur 13 tire un courant de surplus Is le plus proche possible de la consigne de courant de surplus Is_n.

On note que les temps de réponse du bloc de régulation de tension en courant 23 et du bloc de régulation de tension 25 doivent être nettement inférieurs à $\Delta T0$. De même, la fréquence de découpage F du hacheur 13 doit être telle que $\Delta T0 >> 1/F$.

Le logiciel de commande du microcontrôleur 20 met donc en oeuvre une première boucle de régulation 27 et une deuxième boucle de régulation 28 imbriquées pour piloter le hacheur 13 et tirer le courant de surplus Is. La première boucle de régulation 27 comporte le bloc de supervision 21, le premier comparateur 22 et le bloc de régulation de courant en tension 23. La deuxième boucle de régulation 28 comprend le deuxième comparateur 24 et le bloc de régulation de tension 25.

Enfin, la tension Vh en sortie du hacheur 13 est appliquée aux bornes des batteries secondaires 17 et de l'onduleur 18, lui-même relié aux moyens de connexion 19 du dispositif de récupération 6. Des équipements externes secondaires 30 sont connectés aux moyens de connexion 19.

Le microcontrôleur 20 gère l'onduleur 18 et les moyens de connexion 19 pour alimenter sélectivement les équipements externes secondaires 30.

L'énergie excédentaire récupérée par le dispositif de récupération 6 et provenant de la centrale 1 permet donc ici d'alimenter les équipements externes secondaires 30.

On décrit maintenant plus en détail le procédé de récupération selon l'invention, utilisé pour récupérer l'énergie excédentaire provenant de la centrale 1.

Le principe de ce procédé repose sur les équations qui suivent.

Au temps T=T0, lorsque le dispositif de récupération 6 n'est pas connecté à la centrale 1, on a : Ipv=Ibatt+Itel, où Ipv est le courant photovoltaïque, Ibatt est le courant de charge de batterie, et Itel est le courant de télécommunication.

Au temps T=T0+$\Delta$T0, on a :

$$Ipv+\Delta Inat=Ibatt+\Delta Inat+Itel,$$

où $\Delta$Inat est une variation de courant égale à la somme de la variation naturelle, pendant le temps $\Delta$T0, du courant photovoltaïque Ipv, et de la variation, dépendant de phases de charge des batteries principales 5, pendant le temps $\Delta$T0, du courant de charge de batterie Ibatt.

On a donc :

$$\Delta Inat=\Delta Ipv\_nat+\Delta Ibatt\_nat,$$

où $\Delta$Ipv_nat est une variation naturelle du courant photovoltaïque Ipv due à une variation de l'ensoleillement, et où $\Delta$Ibatt_nat est une variation du courant de charge de batterie Ibatt due à l'évolution de l'état des batteries principales 5.

On a donc :

$$\Delta Inat/\Delta T =\Delta Ipv\_nat/\Delta T+\Delta Ibatt\_nat\approx\Delta Inat.$$

Au temps T=T0, lorsque le dispositif de récupération 6 est connecté à la centrale 1, on a :

$$Ipv=Ibatt+Itel+Is,$$

où Is est le courant de surplus.

Au temps T=T0+$\Delta$T0, lorsque l'on impose une augmentation de $\Delta$Is0 au courant de surplus, on a : Ipv+$\Delta$Inat+(1-k).$\Delta$Is0=Ibatt+$\Delta$Inat-k.$\Delta$Is0+Itel+Is+$\Delta$Is0.

Ainsi,

$$\Delta Ibatt/\Delta T0=\Delta Ipv/\Delta T0-\Delta Is/\Delta T0=\Delta Inat/\Delta T0-k.\Delta Is0/\Delta T0.$$

La constante k (0<k<1) représente la contribution des batteries principales 5 à la variation $\Delta$Is0 imposée au courant de surplus Is : si le courant de surplus Is est augmenté de $\Delta$Is0, les batteries principales 5 contribuent à fournir cette variation de surplus à hauteur de k.AIs0.

Cette contribution des batteries principales 5 est détectable lorsque $\Delta$Is0, $\Delta$T0 et k sont choisis de sorte que :

$$k.\Delta Is0/\Delta T>>\Delta Inat/\Delta T.$$

La constante k est ici choisie égale à 1/2.

De même $\Delta$T0 doit être suffisamment petit devant les constantes de temps pour lesquelles les variations « naturelles » du courant photovoltaïque Ipv et du courant de charge de batterie Ibatt sont détectables.

Le procédé de récupération selon l'invention consiste donc à connecter à la centrale 1 le dispositif de récupération 6, à incrémenter, au temps Tn+1=Tn+$\Delta$T0, la consigne de courant de surplus Is_n d'une première valeur prédéterminée, égale à $\Delta$Is0, et à mesurer le courant de charge de batterie Ibatt_n. Si l'incrémentation de la consigne de courant de surplus Is_n résulte en une diminution du courant de charge de batterie Ibatt_n supérieure à une deuxième valeur prédéterminée, égale à k.$\Delta$Is0=$\Delta$Is0/2, cela signifie que le potentiel de charge des batteries principales 5 est diminué à cause de la présence du dispositif de récupération 6. Le courant de surplus récupéré ne correspond pas à une énergie excédentaire, mais à une énergie utile pour charger les batteries principales 5, et donc pour alimenter le site de télécommunication 2 lorsque l'ensoleillement est faible. On décrémente donc dans ce cas la consigne de courant. Sinon, on peut incrémenter à nouveau la consigne de courant de surplus Is_n.

On note que le dispositif de récupération 6 ne tire du courant de surplus Is que lorsque les batteries principales 5 sont en charge, c'est à dire lorsque le courant de charge de batterie Ibatt est positif.

On note aussi que la consigne de courant de surplus Is_n ne doit pas dépasser une valeur de consigne de courant maximale 10. La valeur de consigne de courant maximale 10 est égale à un maximum entre le besoin en courant du dispositif de récupération 6 et des équipements externes secondaires 30, et entre une valeur de courant maximale dépendant de la capacité de récupération de courant du dispositif de récupération 6.

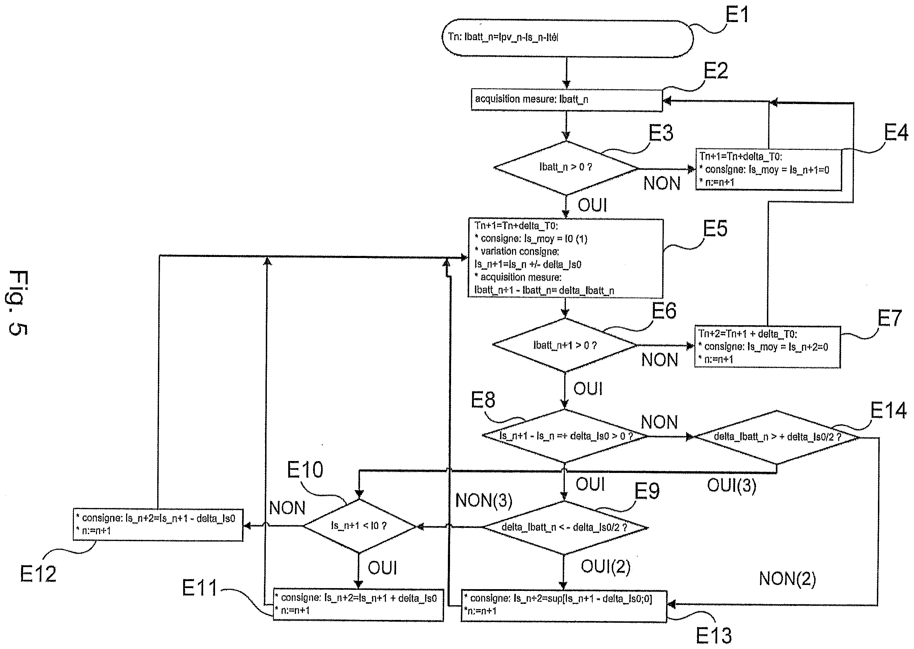

On décrit maintenant plus en détail, en référence à la figure 5, les différentes étapes du procédé de récupération selon l'invention.

Au temps T=Tn, le courant de charge de batterie Ibatt_n est égal au courant photovoltaïque Ipv_n auquel sont retranchés la consigne de courant de surplus Is_n et le courant de télécommunication Itel_n - ou Itel, car le courant de télécommunication Itel est presque constant (étape E1).

Le courant de charge de batterie Ibatt_n est mesuré (étape E2), puis comparé à 0 (étape E3).

Si le courant de charge de batterie Ibatt_n est inférieur ou égal à 0, cela signifie que les batteries principales 5 sont en train d'être déchargées pour alimenter le site de télécommunication 2. La centrale 1 ne comprend donc pas d'énergie excédentaire. Au temps Tn+1=Tn+ΔT0, la consigne de courant de surplus Is_n+1 est mise à 0 (étape E4).

Si le courant de charge de batterie Ibatt_n est supérieur à 0, on incrémente au temps Tn+1=Tn+ΔT la consigne de courant de surplus Is_n de la première valeur prédéterminée, soit de ΔIs0, ou bien on décrémente la consigne de courant de surplus Is_n de la première valeur prédéterminée, soit de ΔIs0 (en fonction de la variation du courant de charge de batterie Ibatt résultant de l'incrémentation précédente ou de la décrémentation précédente).

Le courant de charge de batterie Ibatt_n+1 est mesuré, et la différence ΔIbatt_n=Ibatt_n+1-Ibatt_n est calculée (étape E5).

Le courant de charge de batterie Ibatt_n+1 est à nouveau comparé à 0 (étape E6).

A nouveau, si le courant de charge de batterie Ibatt_n+1 est inférieur ou égal à 0, cela signifie que les batteries principales 5 sont en train d'être déchargée. La centrale 1 ne comprend donc pas d'énergie excédentaire. Au temps Tn+2=Tn+1+ΔT, la consigne de courant de surplus Is_n+2 est mise à 0 (étape E7).

Si le courant de charge de batterie Ibatt_n+1 est supérieur à 0, on détermine si la consigne de courant de surplus Is_n vient d'être incrémentée (de ΔIs0) ou décrémentée (de ΔIs0) : étape E8.

Si la consigne de courant de surplus Is_n vient d'être incrémentée, on vérifie si cette incrémentation résulte en une diminution du courant de charge de batterie supérieure à la deuxième valeur prédéterminée, soit à ΔIs0/2 (étape E9).

Si l'incrémentation de la consigne de courant de surplus résulte en une diminution du courant de charge de batterie inférieure ou égale à la deuxième valeur prédéterminée, soit à ΔIs0/2, on vérifie si la consigne de courant de surplus Is_n est bien inférieure à la valeur de consigne de courant maximale 10 (étape E10). Si c'est le cas, la consigne de courant de surplus Is_n+1 est incrémentée de ΔIs0 (étape E11), et le procédé de récupération revient à l'étape E5. Si ce n'est pas le cas, comme la consigne de courant de surplus a atteint la valeur de consigne de courant maximale 10, la consigne de courant de surplus est décrémentée de ΔIs0 (étape E12), et le procédé de récupération revient à l'étape E5.

En revenant à l'étape E9, si l'incrémentation de la consigne de courant de surplus résulte en une diminution du courant de charge de batterie supérieure à la deuxième valeur prédéterminée, la consigne de courant de surplus est décrémentée de ΔIs0. La consigne de courant de surplus au temps Tn+2 est donc égale au maximum entre la consigne de courant de surplus au temps Tn+1 à laquelle on a retranché ΔIs0, et entre une valeur nulle (étape E13). Le procédé de récupération revient alors à l'étape E5.

En revenant à l'étape E8, si la consigne de courant de surplus Is_n vient d'être décrémentée, on vérifie si cette décrémentation résulte en une augmentation du courant de charge supérieure à la deuxième valeur prédéterminée (étape E14).

Si c'est le cas, la prochaine étape est l'étape E10 (puis E11 ou E12) : la consigne de courant de surplus est incrémentée si elle est inférieure à la valeur de consigne de courant maximale 10, et décrémentée sinon.

Si ce n'est pas le cas, la prochaine étape est l'étape E13 (puis E5) : la consigne de courant de surplus est décrémentée.

On fournit quelques valeurs numériques pour illustrer ce qui vient d'être dit.

La centrale 1 comporte ici six ensembles parallèles de sept panneaux solaires photovoltaïques montés en série de 300Wc, ainsi que deux ensembles parallèles de douze batteries principales montées en série de 3700Ah.

On a ΔIbatt/ΔT0<2A/min, qui est obtenu en début de phase d'absorption des batteries principales.

On a ΔIpv_nat/ΔT0<20A/s, qui est calculé sur une variation d'ensoleillement maximal égale à 1000W/m$^2$/s (norme *NF EN50530-Annexe B*).

On obtient donc ΔInat/ΔT0≤20A/s.

On doit par ailleurs avoir k.ΔIs0/ΔT0>ΔIna/ΔT0, avec ΔT0>>1/F, F étant la fréquence de découpage du hacheur.

On choisit ici k=0,5, F=10kHz, ΔIs0=2A, et 50μs<ΔT0<50ms, et donc on prend ΔT0=50ms.

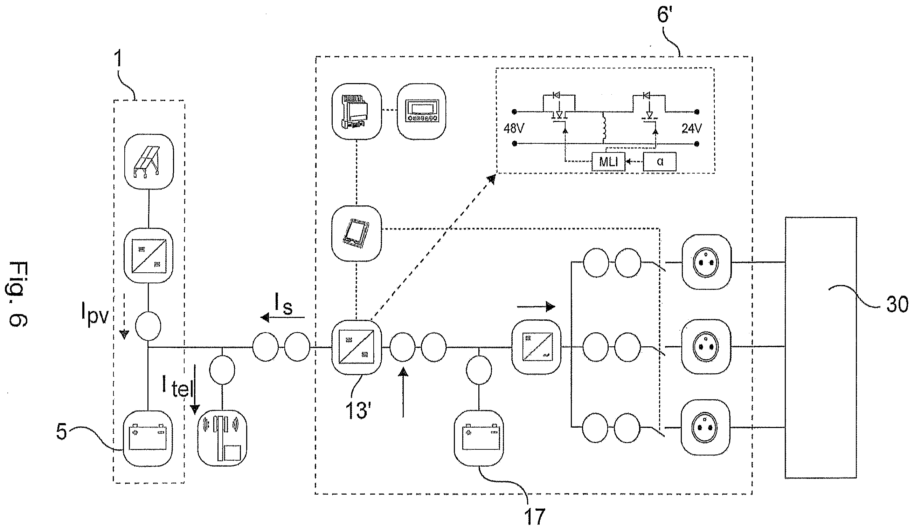

En référence à la figure 6, le dispositif de récupération selon un deuxième mode de réalisation de l'invention 6' comporte un hacheur 13' différent du hacheur 13 du dispositif de récupération selon le premier mode de réalisation de l'invention 6.

Le hacheur 13' est ici un hacheur dévolteur/survolteur réversible en courant. L'utilisation d'un tel hacheur 13' permet d'utiliser une partie du courant de surplus Is, stocké dans les batteries secondaires 17, pour alimenter le site de télécommunication 2 en cas de perte des batteries principales 5. La perte des batteries principales 5 est symbolisée par un circuit ouvert sur la figure 6. Bien sûr, le courant de surplus Is, stocké dans les batteries secondaires 17, peut aussi être utilisé pour alimenter le site de télécommunication 2 dans des cas autres qu'une perte de batterie, lorsque l'énergie électrique fournie par les panneaux solaires et par les batteries principales est insuffisante pour alimenter le site de télécommunication 2.

Le dispositif de récupération selon le deuxième mode de réalisation de l'invention 6' permet par ailleurs d'optimiser le coût et l'utilisation des batteries principales 5 et des batteries secondaires 17. Ainsi, il est avantageux d'utiliser par exemple, pour les batteries principales 5, une technologie lithium-ion adaptée à des décharges quotidiennes peu intenses par le site de télécommunication 2, et une technologie plomb-acide pour les batteries secondaires 17, adaptée à stocker le courant de surplus pour suppléer les batteries principales lors de longues périodes d'absence d'ensoleillement.

Lorsque la mise en oeuvre du procédé de récupération utilise le dispositif de récupération selon le deuxième mode de réalisation de l'invention 6', le procédé de récupération comporte une étape additionnelle consistant à stocker le courant de surplus dans les batteries secondaires 17, et, si l'énergie électrique fournie par le dispositif de conversion d'énergie et par les batteries principales est insuffisante, d'utiliser le courant de surplus pour alimenter le site de télécommunication 2.

Bien entendu, l'invention n'est pas limitée aux modes de réalisation décrits mais englobe toute variante entrant dans le champ de l'invention telle que définie par les revendications.

Bien que l'on ait indiqué que la centrale est une centrale de production photovoltaïque, l'invention s'applique à tout type de centrale de production d'énergie électrique à partir de tout type d'énergie renouvelable.

De même, l'installation électrique alimentée par la centrale n'est pas nécessairement un site de télécommunication.

On note que les capteurs de courant permettant de mesurer le courant photovoltaïque, le courant de charge de batterie, le courant de télécommunication et le courant de surplus peuvent être positionnés soit dans la centrale, soit dans le dispositif de récupération.

Bien que l'on ait indiqué que la centrale comporte des batteries principales et le dispositif de récupération des batterie secondaire, la centrale et le dispositif de récupération peuvent parfaitement comporter respectivement des moyens de stockage principaux et des moyens de stockage secondaires d'énergie électrique différents, comprenant par exemple des supercapacités.

## Revendications

1. Procédé pour récupérer une énergie excédentaire dans une centrale de production d'énergie électrique (1), la centrale étant destinée à alimenter une installation électrique (2) et comprenant un dispositif de conversion d'énergie renouvelable en énergie électrique (3) et des moyens de stockage principaux (5) de l'énergie électrique, le procédé comportant les étapes de :

    - connecter à la centrale un dispositif de récupération (6) destiné à tirer un courant de surplus (Is) provenant de la centrale, le dispositif de récupération comprenant un convertisseur de puissance ;
    - piloter en courant le convertisseur de puissance (13) en mettant en oeuvre une boucle de régulation (27, 28) ;
    - définir, au temps $T_n$, une consigne de courant de surplus (Is_n) de la boucle de régulation ;
    - incrémenter, au temps $T_{n+1} = T_n + \Delta T0$, la consigne de courant de surplus (Is_n) d'une première valeur prédéterminée ($\Delta$Is0);
    - mesurer un courant de charge (Ibatt_n+1) des moyens de stockage principaux (5) ;
    - si l'incrémentation de la consigne de courant de surplus résulte en une diminution du courant de charge supérieure à une deuxième valeur prédéterminée (k.$\Delta$Is0), décrémenter la consigne de courant de surplus de la première valeur prédéterminée ($\Delta$Is0) ;
    - sinon, incrémenter à nouveau la consigne de courant de surplus (Is_n+1) de la première valeur prédéterminée.

2. Procédé selon la revendication 1, comprenant en outre les étapes, si la consigne de courant vient d'être décrémentée, de :

    - mesurer le courant de charge des moyens de stockage principaux (5) ;

- si la décrémentation de la consigne de courant de surplus résulte en une augmentation du courant de charge supérieure à la deuxième valeur prédéterminée, incrémenter la consigne de courant de surplus de la première valeur prédéterminée ;
- sinon, décrémenter à nouveau la consigne de courant de surplus de la première valeur prédéterminée.

3. Procédé selon la revendication 1, comprenant en outre l'étape de détecter, à partir du courant de charge (Ibatt_n) des moyens de stockage principaux (5), si les moyens de stockage principaux (5) sont en train d'être chargés ou bien d'être déchargés, et de mettre la consigne de courant de surplus à 0 si les moyens de stockage principaux (5) sont en train d'être déchargés.

4. Procédé selon la revendication 1, dans lequel la deuxième valeur prédéterminée est égale à $k.\Delta Is0$, $\Delta Is0$ étant la première valeur prédéterminée et k étant compris entre 0 et 1.

5. Procédé selon la revendication 1, comprenant en outre les étapes de stocker le courant de surplus dans des moyens de stockage secondaires (17) du dispositif de récupération (6), et, si l'énergie électrique fournie par le dispositif de conversion (3) et par les moyens de stockage principaux est insuffisante, d'utiliser le courant de surplus pour alimenter l'installation électrique (2).

6. Dispositif de récupération adapté à être connecté à une centrale de production d'énergie pour tirer un courant de surplus provenant de la centrale et à mettre en oeuvre le procédé selon l'une des revendications 1 à 5, le dispositif de récupération comprenant un convertisseur de puissance et un module de pilotage en courant du convertisseur de puissance qui met en oeuvre une boucle de régulation.

7. Dispositif de récupération selon la revendication 6, dans lequel le convertisseur de puissance comporte un hacheur.

8. Dispositif de récupération selon la revendication 7, dans lequel le hacheur est réversible en courant.

9. Dispositif de récupération selon la revendication 6, dans lequel le module de pilotage met en oeuvre un bloc de supervision (21) destiné à générer une consigne de courant de surplus, un bloc de régulation de courant en tension (23), et un bloc de régulation de tension (25).

10. Dispositif de récupération selon la revendication 6, comprenant des moyens de stockage secondaires (17) destinés à stocker au moins partiellement le courant de surplus.

11. Programme d'ordinateur comprenant des instructions pour mettre en oeuvre, par un microcontrôleur d'un dispositif de récupération adapté à être connecté à une centrale de production d'énergie, le procédé selon l'une des revendications 1 à 5.

12. Moyens de stockage, **caractérisés en ce qu'**ils stockent un programme d'ordinateur comprenant des instructions pour mettre en oeuvre, par un microcontrôleur d'un dispositif de récupération adapté à être connecté à une centrale de production d'énergie, le procédé selon l'une des revendications 1 à 5.

**Patentansprüche**

1. Verfahren zur Rückgewinnung überschüssiger Energie in einem Kraftwerk (1) zur Elektroenergieerzeugung, wobei das Kraftwerk dazu bestimmt ist, eine elektrische Anlage (2) zu speisen und eine Vorrichtung (3) zur Umwandlung erneuerbarer Energie in elektrische Energie und Hauptspeichermittel (5) zum Speichern der elektrischen Energie umfasst, wobei das Verfahren die Schritte umfasst:

- Verbinden einer Rückgewinnungsvorrichtung (6) mit dem Kraftwerk, wobei die Rückgewinnungsvorrichtung dazu bestimmt ist, überschüssigen Strom (Is), der aus dem Kraftwerk stammt, zu ziehen, wobei die Rückgewinnungsvorrichtung einen Leistungskonverter umfasst;
- Steuern des Leistungskonverters (13) in Bezug auf den Strom unter Verwendung eines Regelkreises (27, 28);
- Definieren eines Sollwertes (Is_n) für überschüssigen Strom des Regelkreises zum Zeitpunkt $T_n$;
- Inkrementieren des Sollwertes (Is_n) für überschüssigen Strom um einen vorgegebenen ersten Wert ($\Delta ts0$) zum Zeitpunkt $Tn+1=Tn+\Delta T0$;
- Messen eines Ladestroms (Ibatt_n+1) der Hauptspeichermittel (5);

- wenn die Inkrementierung des Sollwertes für überschüssigen Strom in einer Abnahme des Ladestroms resultiert, die größer als ein vorgegebener zweiter Wert (k.∆ls0) ist, Dekrementieren des Sollwertes für überschüssigen Strom um den vorgegebenen ersten Wert (∆ts0);
- andernfalls erneutes Inkrementieren des Sollwertes (Is_n+1) für überschüssigen Strom um den vorgegebenen ersten Wert.

2. Verfahren nach Anspruch 1, ferner, wenn der Stromsollwert soeben dekrementiert wurde, umfassend die Schritte:

- Messen des Ladestroms der Hauptspeichermittel (5);
- wenn die Dekrementierung des Sollwertes für überschüssigen Strom in einer Zunahme des Ladestroms resultiert, die größer als der vorgegebene zweite Wert ist, Inkrementieren des Sollwertes für überschüssigen Strom um den vorgegebenen ersten Wert;
- andernfalls erneutes Dekrementieren des Sollwertes für überschüssigen Strom um den vorgegebenen ersten Wert.

3. Verfahren nach Anspruch 1, ferner umfassend den Schritt des Erfassens anhand des Ladestroms (Ibatt_n) der Hauptspeichermittel (5), ob die Hauptspeichermittel (5) gerade geladen bzw. entladen werden, und des Setzens des Sollwertes für überschüssigen Strom auf 0, wenn die Hauptspeichermittel (5) gerade entladen werden.

4. Verfahren nach Anspruch 1, bei dem der vorgegebene zweite Wert gleich k.∆ls0 ist, wobei Als0 der vorgegebene erste Wert und k zwischen 0 und 1 enthalten ist.

5. Verfahren nach Anspruch 1, ferner umfassend die Schritte des Speicherns des überschüssigen Stroms in Nebenspeichermitteln (17) der Rückgewinnungsvorrichtung (6) und, wenn die von der Umwandlungsvorrichtung (3) und von den Hauptspeichermitteln gelieferte elektrische Energie unzureichend ist, des Verwendens des überschüssigen Stroms, um die elektrische Anlage (2) zu speisen.

6. Rückgewinnungsvorrichtung, die dazu geeignet ist, mit einem Energieerzeugungskraftwerk verbunden zu werden, um überschüssigen Strom, der aus dem Kraftwerk stammt, zu ziehen und das Verfahren nach einem der Ansprüche 1 bis 5 durchzuführen, wobei die RückgewinnungsVorrichtung einen Leistungskonverter und ein Stromsteuermodul für den Leistungskonverter umfasst, das einen Regelkreis einsetzt.

7. Rückgewinnungsvorrichtung nach Anspruch 6, bei der der Leistungskonverter einen Zerhacker umfasst.

8. Rückgewinnungsvorrichtung nach Anspruch 7, bei der der Zerhacker im Strom umkehrbar ist.

9. Rückgewinnungsvorrichtung nach Anspruch 6, bei der das Steuermodul einen Überwachungsblock (21) einsetzt, der dazu bestimmt ist, einen Sollwert für überschüssigen Strom zu erzeugen, einen Strom-SpannungsRegulierungsblock (23) und einen Spannungsregulierungsblock (25).

10. Rückgewinnungsvorrichtung nach Anspruch 6, umfassend Nebenspeichermittel (17), die dazu bestimmt sind, den überschüssigen Strom zumindest teilweise zu speichern.

11. Computerprogramm, umfassend Anweisungen zum Durchführen mit Hilfe eines Mikrocontrollers einer Rückgewinnungsvorrichtung, die dazu geeignet ist, mit einem Energieerzeugungskraftwerk verbunden zu werden, des Verfahrens nach einem der Ansprüche 1 bis 5.

12. Speichermittel, **dadurch gekennzeichnet, dass** sie ein Computerprogramm speichern, das Anweisungen umfasst, um mit Hilfe eines Mikrocontrollers einer Rückgewinnungsvorrichtung, die dazu geeignet ist, mit einem Energieerzeugungskraftwerk verbunden zu werden, das Verfahren nach einem der Ansprüche 1 bis 5 durchzuführen.

**Claims**

1. A method of recovering excess energy in an electric power station (1), the electric power station being for powering an electrical installation (2) and comprising a converter device (3) for converting renewable energy into electrical energy and main storage means (5) for storing the electrical energy, the method comprising the steps of:

- connecting a recovery device (6) to the electric power station for the purpose of drawing surplus current (Is) coming from the electric power station, the recovery device including a power converter;
- current controlling the power converter (13) while performing a regulation loop (27, 28);
- defining, at a time Tn a surplus current setpoint (Is_n) for the regulation loop;
- incrementing, at a time Tn+1=Tn+$\Delta$T0, the surplus current setpoint (Is_n) by a first predetermined value ($\Delta$Is0) ;
- measuring a battery current (Ibatt_n+1) of the main storage means (5);
- if the increment in the surplus current setpoint results in a decrease in the battery current greater than a second predetermined value (k.$\Delta$Is0), decrementing the surplus current setpoint by the first predetermined value ($\Delta$Is0);
- else, incrementing the surplus current setpoint (Is_n+1) once more by the first predetermined value.

2. A method according to claim 1, further comprising the following steps if the current setpoint has just been decremented:

- measuring the battery current of the main storage means (5);
- if the decrement of the surplus current setpoint results in an increase in the battery current greater than the second predetermined value, incrementing the surplus current setpoint by the first predetermined value;
- else decrementing the surplus current setpoint once more by the predetermined first value.

3. A method according to claim 1, further comprising the step of using the battery current (Ibatt_n) of the main storage means (5) to detect whether the main storage means (5) are being charged or being discharged, and setting the surplus current setpoint to 0 if the main storage means (5) are being discharged.

4. A method according to claim 1, wherein the second predetermined value is equal to k.$\Delta$Is0, $\Delta$Is0 being the first predetermined value, and k lying in the range 0 to 1.

5. A method according to claim 1, further comprising the step of storing the surplus current in secondary storage means (17) of the recovery device (6), and if the electrical power supplied by the converter device (3) and by the main storage means is insufficient, using the surplus current for powering the electrical installation (2) .

6. A recovery device adapted to be connected to an electric power station for drawing surplus current coming from the electric power station and for performing the method according to any one of claims 1 to 5, the recovery device comprising a power converter and a current control module for the power converter that performs a regulation loop.

7. A recovery device according to claim 6, wherein the power converter includes a chopper.

8. A recovery device according to claim 7, wherein the chopper is current reversible.

9. A recovery device according to claim 6, wherein the control module implements a supervisor block (21) for generating a surplus current setpoint, a current-to-voltage regulation block (23), and a voltage regulation block (25).

10. A recovery device according to claim 6, including secondary storage means (17) for storing at least some of the surplus current.

11. A computer program including instructions for enabling a microcontroller of a recovery device adapted to be connected to an electric power station to perform the method according to any one of claims 1 to 5.

12. Storage means, **characterized in that** they store a computer program including instructions for enabling a microcontroller of a recovery device suitable for being connected to an electric power station to perform the method according to any one of claims 1 to 5.

Fig. 1

Fig. 2

EP 3 273 565 B1

Fig. 3

Fig. 4

Fig. 5

EP 3 273 565 B1

Fig. 6

**RÉFÉRENCES CITÉES DANS LA DESCRIPTION**

**Documents brevets cités dans la description**

- WO 2010134855 A1